# EUROPEAN PATENT APPLICATION

(11) **EP 2 308 739 A2**
(43) Date of publication of application: **13.04.2011**
(21) Application number: 10171821.1
(22) Date of filing: 04.08.2010
(51) Int. Cl.: B62B 3/02

(54) **Trolley for moving goods**

(30) Priority: 07.10.2009 IT MI20091716
(71) Applicant: Leone, Nicola, 20147 Milano (IT)
(72) Inventor: Leone, Nicola, 20147 Milano (IT)
(74) Representative: Pistolesi, Roberto

(57) **Abstract**

The present invention relates to a trolley (10) comprising: a rigid base (12) provided with a plurality of wheels (14); a soft bag (16) mounted on the rigid base; and a handle (18) suitable for moving the trolley loaded with goods (100). The bag comprises an elastic structure (20) arranged so that the bag may assume alternately a first expanded configuration, where it extends in a direction substantially perpendicular to the rigid base, and a second collapsed configuration, where it remains folded up on itself in the vicinity of the rigid base.

## Description

The present invention relates to a trolley for moving goods and the like, in particular a collapsible trolley able to assume alternately an expanded configuration and a collapsed configuration.

Various types of trolleys intended to facilitate the movement of goods, for example inside a large shop, during transit between the shop and one's home or in the vicinity of the user's home, are known. A first type of trolley, which is suitable for use inside the shop and in the immediate vicinity, is typically provided by the shop itself. It is intended to move large loads and must therefore be extremely sturdy. This type of trolley is often made with a solid steel structure provided with four steering wheels and having, fixed thereon, a basket which is often made of steel wire. A bar is fixed to the structure so as to provide a firm grip for pushing and steering the trolley. This trolley is somewhat costly and decidedly too bulky for use by the user outside of the shop.

A second type of trolley essentially consists of a bag which is made of cloth or other flexible and strong material and is mounted on a rigid frame. The frame usually comprises a pair of wheels at the bottom and extends upwards so as to form a handle for pulling the trolley. This type of trolley has the advantage that it is very light and extremely manageable. However, it is suitable for transporting a quantity of merchandise which is limited by the size of the bag; this type of trolley in fact does not allow easy transportation of packages which cannot be contained inside the bag, for example because of the excessive volume or irregular shape. Furthermore, the dimensions of the bag are usually determined taking into account a single user's requirements, thus excluding the possibility of being able to fill the trolley, for example, with the goods required for an entire family. Also, the frame of this type of trolley is rigid and, even when the trolley is not used, has a significant volume.

Finally, the prior art described above does not allow easy use of more than one trolley at the same time.

These known trolleys, although widely established, are, therefore, not without drawbacks.

The object of the present invention is therefore to overcome at least partly the drawbacks mentioned above with reference to the prior art.

In particular, a task of the present invention is to provide a collapsible trolley suitable for transporting a large quantity of goods.

Also, a task of the present invention is to provide a collapsible trolley able to assume a compact volume when not used for the transportation of goods. Moreover, a task of the present invention is to provide a collapsible trolley which has stable properties also when used with large loads and bulky objects.

The abovementioned object and tasks are achieved by a collapsible trolley according to Claim 1.

The characteristic features and further advantages of the invention will emerge from the description provided hereinbelow, of a number of examples of embodiment, provided purely by way of a non-limiting example, with reference to the accompanying drawings in which:
- Figure 1 shows a perspective view of a trolley according to the invention in the expanded configuration;
- Figure 2 shows a bottom view of a trolley according to the invention in the collapsed configuration;
- Figure 3 shows a top view of the trolley according to Figure 2;
- Figure 4 shows a side view of the trolley according to Figure 2;
- Figure 5 shows a bottom view of a trolley according to the invention in the collapsed configuration;
- Figure 6 shows a top view of the trolley according to Figure 5;
- Figure 7 shows a side view of the trolley according to Figure 5;
- Figure 8 shows a first combined arrangement of two trolleys according to the invention;
- Figure 9 shows a second combined arrangement of two trolleys according to the invention;
- Figure 10 shows a perspective view of a trolley according to the invention in the expanded configuration;
- Figure 11 shows a third combined arrangement of two trolleys according to the invention;
- Figure 12 shows a bottom view of a trolley according to the invention in the collapsed configuration;
- Figure 13 shows a top view of the trolley according to Figure 12;
- Figure 14 shows a side view of the trolley according to Figure 12;
- Figure 15 shows a fourth combined arrangement of two trolleys according to the invention.

With reference to the accompanying figures, 10 denotes in its entirety the trolley for moving goods according to the invention.

The trolley 10 comprises:
- a rigid base 12 provided with a plurality of wheels 14;
- a soft bag 16 mounted on the rigid base 12; and
- a handle 18 suitable for moving the trolley 10 loaded with goods 100.

The bag 16 comprises an elastic structure 20 arranged so that the bag may assume alternately a first expanded configuration, where it extends in a direction substantially perpendicular to the rigid base 12, and a second collapsed configuration, where it remains folded up on itself in the vicinity of the rigid base 12.

Moreover, the handle 18 is connected to the trolley 10 according to the invention by means of a flexible strap 22.

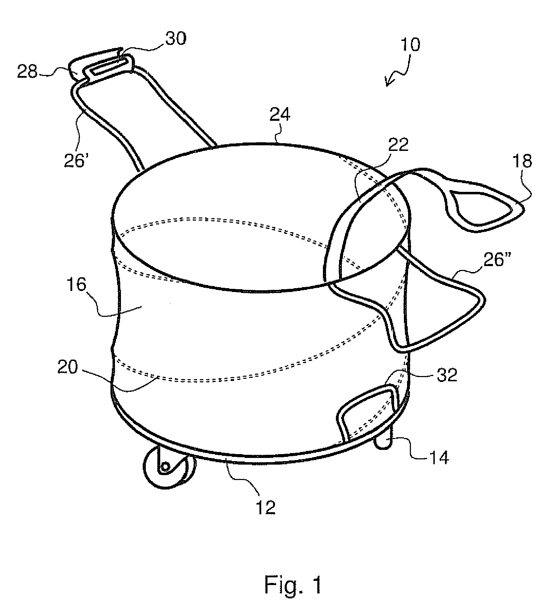

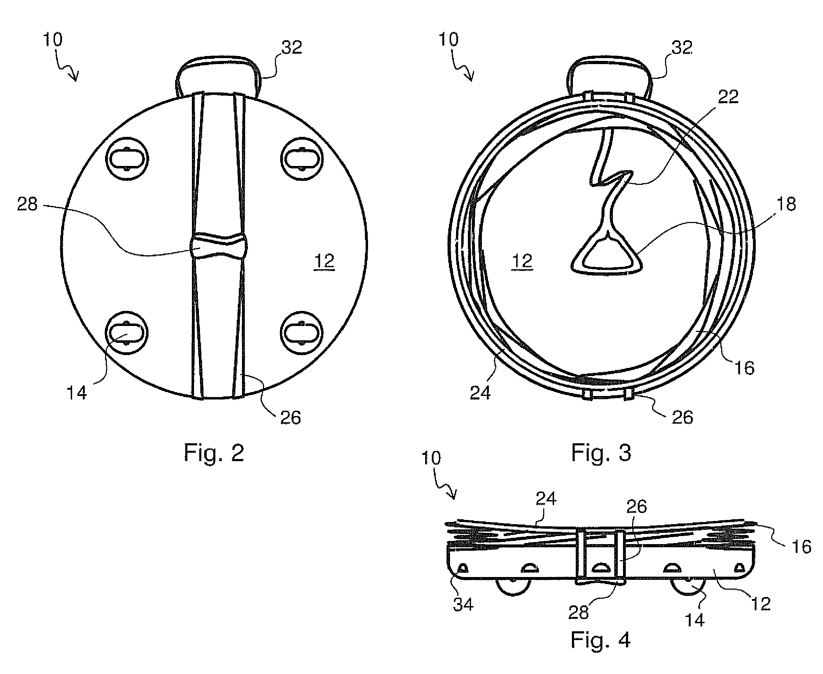

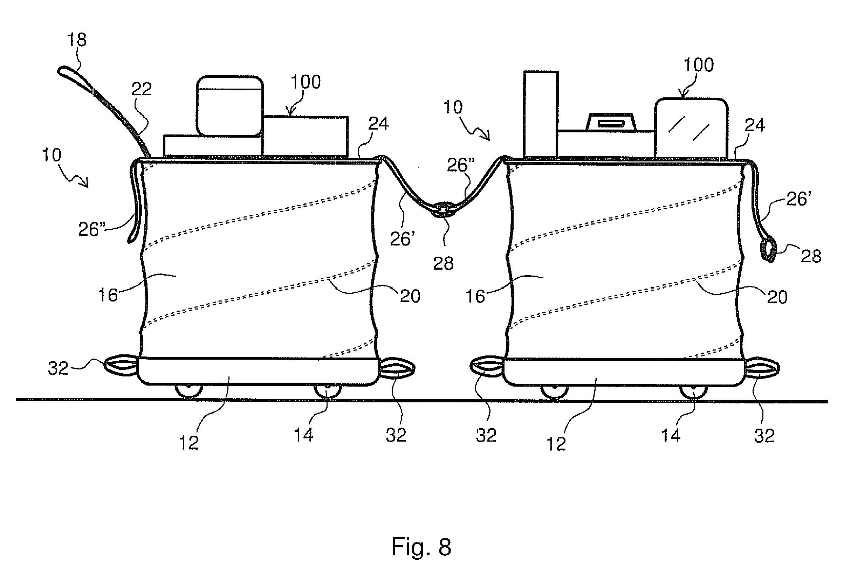

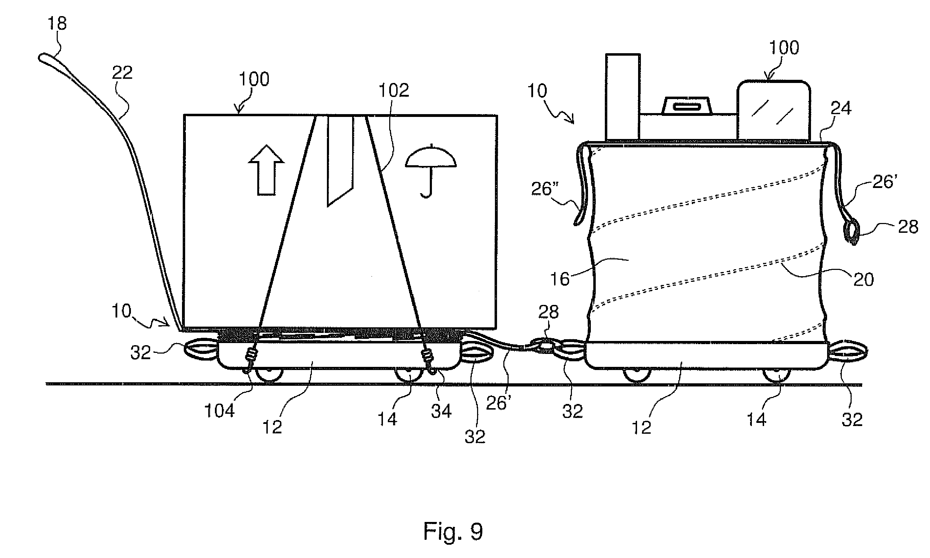

Here and in the description below it is considered that the trolley 10, in its expanded configuration, is ready for use. It is considered, in other words, that the trolley 10 rests on the ground by means of the wheels 14, for example as shown in Figures 8 and 9. With reference to this position of the trolley 10 the expressions "bottom", "lower" and the like are used to indicate positions which are relatively close to the ground. In the same way, "top", "upper" and the like are used to indicate positions which are relatively distant from the ground. These expressions are used, for the sake of consistency of the description, also with reference to the trolley in the collapsed configuration, despite the fact that in this configuration it may easily assume very different positions relative to the ground. It will be stated, for example, that the wheels 14 are situated at the bottom of the trolley 10, when considering the latter both in the expended configuration according to Figure 1 and in the collapsed configuration according to Figure 2.

The rigid base 12 has a substantially flat extended form. In accordance with one embodiment, it is made of polymer material, for example by means of moulding or injection-moulding. In accordance with other embodiments, the rigid base 12 may be made of aluminium or plywood. These embodiments have the advantage that they are inexpensive, sturdy and light at the same time. In accordance with other possible embodiments, the rigid base 12 may be made using different technology and/or materials in order to satisfy specific requirements.

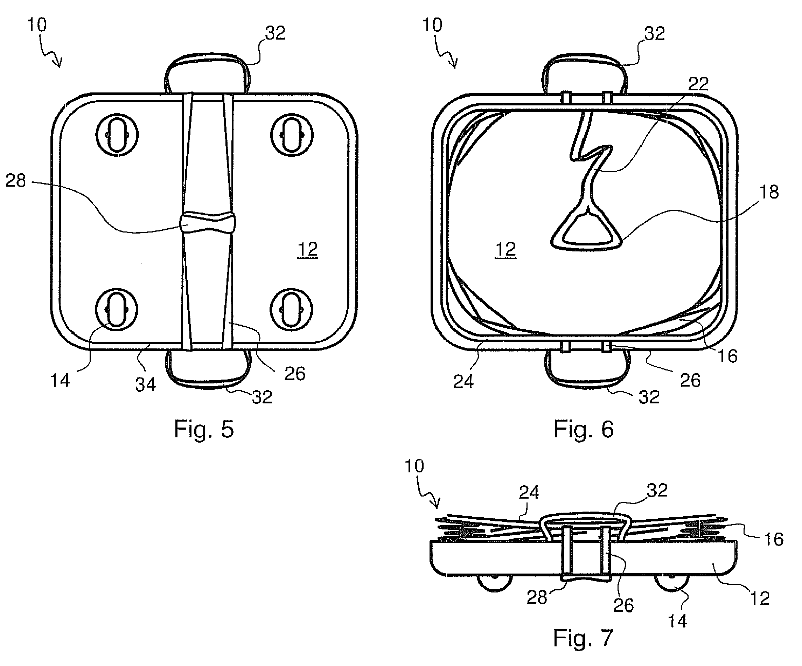

The accompanying Figures 2 and 5 show, for the sake of simplicity, the bottom surface of the rigid base 12 on which four wheels 14 are arranged, but in other embodiments the number of wheels 14 may be different. The number of wheels may be determined, for each embodiment, on the basis of specific considerations relating to the maximum load which can be transported by the trolley 10, the stability of the trolley 10 itself, and the like.

In the same way, during the design stage, the materials, dimensions and types of wheels 14 may be chosen so as to be best suited for the specific requirements.

The bag 16 is defined as being soft because it must be able to collapse onto itself, at least in the vertical direction, i.e. in the direction perpendicular to the rigid base 12. The bag 16 is preferably made of cloth, for example nylon or cotton cloth or using other spun fabrics suitable for ensuring an adequate strength during use. In accordance with other embodiments, the bag may be made using a mesh or a thin sheet of plastic. In accordance with other embodiments, the bag 16, which is soft in the vertical direction, may be strengthened in the other directions, for example using rigid rings.

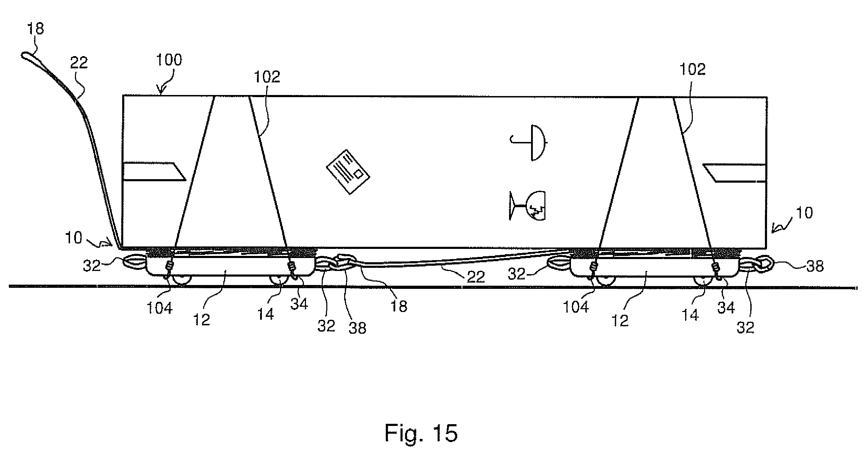

The handle 18, as mentioned above, is suitable for moving the trolley 10, including when it is loaded with goods 100 and also when the bag 16 is in the collapsed position as shown in Figures 9 and 15. The handle 18 is fixed to the trolley 10 by means of a flexible strap 22, preferably is fixed to the rigid base 12 and even more preferably is fixed to the rigid base 12 in the vicinity of the edge inside the bag 16.

The flexible strap 22 by means of which the handle 18 is fixed to the trolley 10 is preferably made using the same material as that used for making the bag 16. With this solution it is possible to obtain a handle 18 which is at the same time lowcost, strong and foldable.

When the strap 22 is extended, the handle 18 allows the user to pull along easily the trolley 10. The strap 22 must be sufficiently long not to force the user to stoop in order to grip the handle 18 and instead allow a comfortable posture. The length of the strap 22 also allows the connection of a second trolley at a suitable distance, for example for exceptional or bulky loads as will be described below with particular reference to Figure 15.

When the strap 22 is instead folded up, the handle 18 is retracted inside the bag 16, whether it be in the expanded or collapsed configuration, without increasing the volume.

In accordance with the accompanying figures, the elastic structure 20 comprises at least one helical-shaped element able to act in the manner of a spring. As shown in the accompanying figures, the helix has dimensions which are substantially the same as those of the bag 16.

This helical element may advantageously consist of spring steel wire which is wound up on itself or, for example, a thin bar of suitably shaped composite material. The effect of the elastic structure 20 is to keep the bag 16 extended or expanded without other constraints and allow it to be easily folded up. Folding-up of the bag 16 on the rigid base 12 may be performed by the user by applying a simple pressure on the top edge of the bag 16 itself. In order to facilitate this action, the top edge of the bag 16 may advantageously comprise a rigid rim 24. The presence of this rigid rim 24 may also improve the retaining effect of the bag 16 if it is full of loose goods.

The elastic structure 20 is preferably housed inside a proper continuous sleeve which is formed on the wall of the bag 16. In this way the elastic structure 20 remains inaccessible and there is no risk of it interfering with the goods 100 and/or with the user. Alternatively, the elastic structure 20 may be fixed at points to the wall of the bag 16 by means of rings or bands, for example provided with hook-and-loop closures of the Velcro^{®} or similar type.

In accordance with the accompanying Figures 1 to 4, the rigid base 12 has a circular shape, from which the substantially cylindrical shape of the bag 16 and the cylindrical helix shape of the elastic structure 20 is obtained. Figures 5 to 7 instead show a similar trolley, but with a rigid base 12 having a substantially rectangular shape. This shape, while resulting in a slightly less regular behaviour of the elastic structure 20, allows more efficient loading of the goods inside the bag 16.

In accordance with one embodiment, the trolley 10 comprises means designed to oppose the action of the elastic structure 20 so as to be able to keep the bag 16 in the collapsed configuration. In accordance with the embodiments shown in the figures, these means comprise a pair of ties 26 which are fixed to the top edge of the bag 16. Once the bag has been arranged in the collapsed configuration, the first tie 26' and the second tie 26" may be passed around the rigid base 12 and joined together on the bottom side of the base 12. A convenient means for joining together the ties 26 consists in a simple link 28 provided with a hook-and-loop closure 30 of the Velcro^{®} or similar type. The link 28 is preferably fixed to one of the two ties 26, for example to the first tie 26'. In some embodiments the link 28 is instead movable, so as to be able to be displaced on any one of the ties 26, the handle 18 and/or the auxiliary grips 32.

As an alternative to the ties 26, the means for opposing the action of the elastic structure 20 may comprise pairs of bands provided with hook-and-loop closures (not shown in the figures) for keeping the bag 16 in the collapsed position.

The ties 26 may also constitute an alternative and/or an addition to the handle 18 for moving the trolley 10.

In accordance with one embodiment, the trolley 10 comprises an auxiliary grip 32, which is preferably fixed to the rigid base 12. The auxiliary grip 32 is designed to allow easy transportation of the trolley 10 when it is in the collapsed configuration. This condition, which is shown for example in Figures 2 and 3, provides the trolley 10 with the form, volume and ease of handling of a small case.

In accordance with other embodiments, the trolley 10 comprises two auxiliary grips 32, which are preferably fixed to the rigid base 12 in positions diametrically opposite each other. Both these auxiliary grips 32 are similar in terms of structure and function to the grip described above. This embodiment is shown for example in Figures 5 and 6.

A further function of the auxiliary grips 32 will be described below, with particular reference to Figure 9.

The mode of use of the trolley 10 according to the invention will be described below, with particular reference to Figures 8 and 9. Starting in the collapsed configuration, the means for opposing the action of the elastic structure 20 must be released, for example the link 28 must be opened and the ties 26 freed, or the system of hook-and-loop pairs must be released. In this way, the elastic structure 20 is able to bring the bag 16 into the expanded configuration. Once the trolley 10 has been positioned with its wheels 14 in contact with the ground, the goods 100 can be loaded inside the bag 16, placing them on the rigid base 12 and then, if necessary, on top of each other. The trolley 10 full of goods 100 may then be pulled by means of the handle 18. This operating condition is similar to that of the trolley 10 shown in the left-hand part of Figure 8.

The particular form of the trolley 10 according to the invention allows, if necessary, two or more trolleys to be connected together. As may be noted in Figure 8, it is possible to arrange next to each other two trolleys of the same type and, by means of the link 28, connect the first tie 26' of the first trolley to the second tie 26" of the second trolley. This forms a train of trolleys 10 which may be moved by simply pulling the first trolley by means of the handle 18.

The particular form of the trolley 10 according to the invention allows, if necessary, the loading of packages which cannot be stored inside the bag 16, for example owing to their excessive volume or irregular shape. As can be noted in the left-hand part of Figure 9, a large-volume package can be loaded onto the trolley 10 while keeping the bag 16 in the collapsed condition. The operating principle of the trolley 10 remains the same, in particular it can be noted how it may be easily pulled by means of the handle 18. In this collapsed and loaded configuration also, the first trolley may be connected, if required, to a second trolley. In this situation, the first tie 26' of the first trolley is situated in the vicinity of the rigid base 12, while the second tie 26" of the second trolley is situated higher up. The first tie 26' of the first trolley may therefore be conveniently connected to the auxiliary grip 32 of the second trolley, which is also situated at the same height. The auxiliary grip 32, in addition to acting as a grip for transporting the trolley 10 in the collapsed configuration, is also suitable for being used as a coupling for pulling the trolley 10.

As can be seen in Figures 8 and 9, the particular configuration allows the connection together of a potentially undefined number of trolleys 10 according to the invention.

In some embodiments, the trolley 10 also comprises means for facilitating the fastening of large-size packages using ordinary elastic cords 102. These means may advantageously comprise locating means 343 intended to receive the hooks 104 which are commonly situated at the ends of the elastic cords 102. These locating means may advantageously be formed in the rigid base 12, for example in the form of a continuous channel (see, for example, Figure 5) or in the form of a number of separate recesses (see, for example, Figure 4). An example of fastening of a large-volume package 100 onto the trolley 10 using elastic cords 102 is shown in the left-hand part of Figure 9.

In view of the possibility of connecting several trolleys 10 to one another, it is preferable for the handle 18, ties 26, link 28 and auxiliary grip 32 to be arranged in the relative positions shown in the accompanying figures. In particular, taking as a reference point the section of the rigid base 12 where the handle 18 is attached, an auxiliary grip 32 is preferably connected to the same section and the second tie 26" is connected to the top of the bag 16 along the vertical of this section. On the other hand, the first tie 26' with the link 28 is preferably connected to the top of the bag 16 in a diametrically opposite position to the second tie 26". This relative arrangement allows easy connection of the trolleys both in the configuration shown in Figure 8 and in the configuration shown in Figure 9. Other relative arrangements are obviously possible. For example it is possible to reverse the positions of the two ties 26. This reversal does not affect at all connection of the trolleys in the configuration shown in Figure 8.

In view of the possibility of connecting several trolleys 10 together, there are no preferences with regard to the handle 18, ties 26, link 28 and auxiliary grip 32.

In the case of large loads it is preferable for the auxiliary grip 32 to be connected to the grip 32 of the next trolley. On the other hand, in the case of large volumes which may also reach a length of 3 metres, the first tie 26' or grip 32 with the removable link 28 is preferably connected to the handle 18. This relative arrangement allows easy connection of the trolleys arranged at a distance from each other of more than one metre, thus allowing, using only two trolleys, an object with a length of up to 3 metres to be moved, as shown in the configuration of Figure 15. Other relative arrangements are obviously possible. For example it is possible to reverse the positions of the two ties 26 and move the link 28 in any one of the handles or ties. This reversal does not affect at all the connection of the trolleys in the configuration shown in Figure 8.

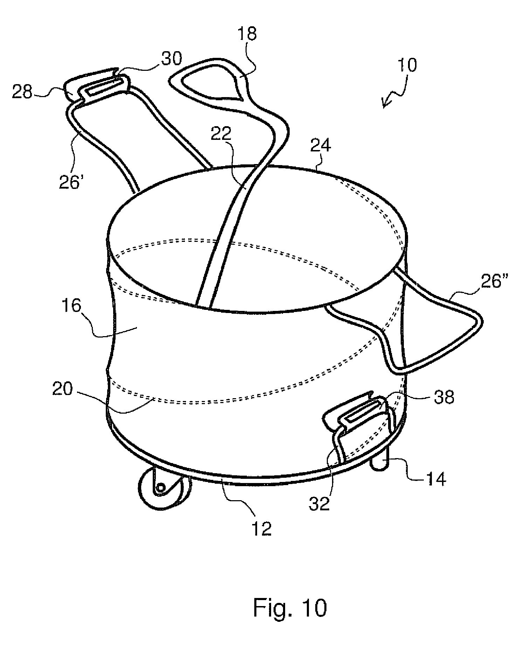

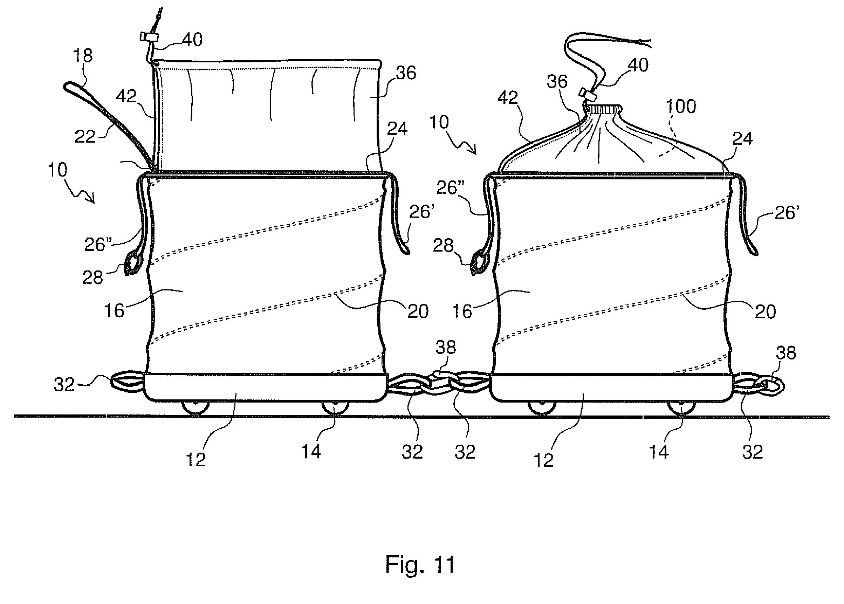

In some embodiments, for example those shown in Figures 10 and 11, an auxiliary grip 32 also comprises a link 38 similar to the link 28 already described above with reference to the ties 26. In particular, the link 38, provided for example with a Velcro^{®} type closure or the like, is suitable for joining together two auxiliary grips 32. As an alternative to a specific link 38 fixed to the auxiliary grip 32, it is possible to use the movable link 28 described above with reference to the ties 26.

The link 38 and/or movable link 28 allow two trolleys 10 to be connected together by means of the auxiliary grips 32 instead of via the ties 26. See Figure 11 in this connection.

Such a connection allows, in certain cases, advantages to be obtained with respect to the connection described above achieved by means of the ties 26. In fact, since it is positioned directly level with the rigid bases 12, this connection is not affected by the deformability of the bag 16 during transmission of the forces between the two trolleys 10.

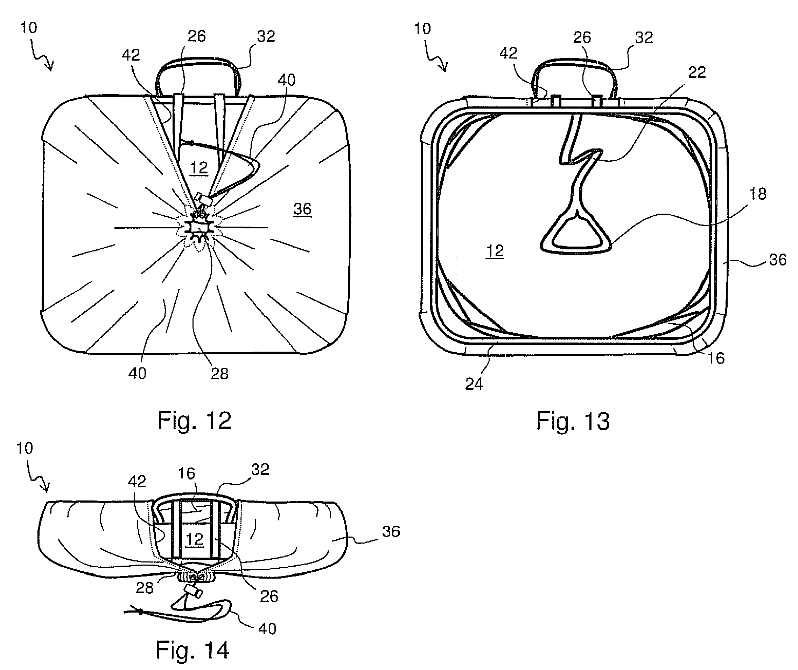

In some embodiments, for example those shown in Figures 11 to 14, the trolley 10 also comprises a hood 36. In the embodiments shown, the hood 36 has a form similar to that of the bag 16 and forms basically an upwards extension thereof (see, in this connection, the left-hand part of Figure 11). A lace 40 is positioned at the top of the hood 36 and allows closing thereof in a manner known per se for example in connection with rucksacks and the like. This hood 36 is designed to perform at least three different functions. Firstly it may usefully protect the inside of the bag 16 from external agents, such as rain, wind, dust and the like and may at the same time prevent access to the bag 16 by unauthorized persons. This function is extremely useful when goods 100 are arranged inside the bag 16 (see, in this connection, the right-hand part of Figure 11). Moreover, the hood 36 may increase the volumetric capacity of the bag 16. Finally, when the trolley 10 is in the collapsed configuration, the hood 36 may be turned over, from the top of the trolley 10, where the bag 16 is situated, towards the bottom of the trolley, where the wheels 14 are located. In this way, as can be seen from Figures 12 and 14, the hood 36 may usefully protect the user from being soiled by the wheels 14 when moving the trolley 10 in the rest condition.

In accordance with some embodiments, the hood 36 comprises an opening 42 which is able to facilitate turning of the hood downwards and allow the handle 18 and/or the auxiliary grip 32 to pass through the hood itself.

In particular, the opening 42 is useful for allowing the handle 18 to pass through so that it is accessible to the user should it be fixed to the rigid base 12 in the vicinity of the inner edge of the bag 16. In this way, as shown in the left-hand part of Figure 11, the handle 18 allows the user to pull the trolley 10 easily. Moreover, the opening 42 is useful for allowing the auxiliary grip 32 to pass through so that it is accessible to the user should the hood 36 be turned downwards so as to cover the wheels. In this way, as shown in Figure 12, the auxiliary grip 32 allows the user to transport the trolley 10 in the collapsed configuration in an easy and hygienic manner, without the danger of coming into direct contact with the wheels.

As may be noted in Figure 15, it is possible to connect together two trolleys 10 according to the invention so as to allow loading of a package 100 of considerable length. In particular, by connecting via the link 38 the auxiliary grip 32 of the first trolley (on the left) to the handle 18 of the second trolley (on the right), the length of the strap 22 of the second trolley determines the distance at which the two trolleys are situated when they are connected together. In this configuration it is possible to load a package of considerable length, for example by arranging both the bags 16 in the collapsed condition as shown in Figure 15. The operating principle of the trolley 10 remains the same, in particular the first trolley may be easily pulled by means of the handle 18.

A similar configuration may be obtained by connecting the handle 18 of the second trolley to the tie 26 of the first trolley instead of to the auxiliary grip 32. It is obviously possible to obtain a similar solution using also a link 28 of the movable type instead of the link 38 of the auxiliary grip 32.

As can be seen in Figures 15, the particular configuration allows the connection together of a potentially undefined number of trolleys 10 according to the invention.

Summarising what has been described above, there therefore exist at least three main ways of connecting together two trolleys 10 according to the invention. A first way (shown in Figure 8) is that of connecting together the first tie 26' of the first trolley to the second tie 26" of the second trolley. A second way (shown in Figure 11) is that of connecting together the auxiliary grip 32 of the first trolley to the auxiliary grip 32 of the second trolley. A third way (shown in Figure 15) is that of connecting together the auxiliary grip 32 of the first trolley to the handle 18 of the second trolley. It should be noted that a further connection method is shown in Figure 9, where the first tie 26' of the first trolley is connected to the auxiliary grip 32 of the second trolley. This solution, however, has a fairly particular scope of use, i.e. being limited to the case where a trolley in the collapsed configuration and another trolley in the expanded configuration must be connected together.

The rigid base 12 of the trolley 10 according to the invention may preferably have a characteristic dimension of between 30 cm an 80 cm and even more preferably of between 40 cm and 70 cm. This characteristic dimension may be, for example, the diameter, in the case where the base 12 is circular (see Figures 2 and 3), or the diagonal, in the case where the base 12 is rectangular (see Figures 5 and 6). The bag 16 and the helix formed by the elastic structure 20 have characteristic dimensions (for example the diameter or the diagonal) which are substantially the same as the characteristic dimension of the rigid base 12.

The trolley 10 according to the invention may preferably have, in the expanded condition of the bag 16, an overall useful height of less than 90 cm, even more preferably of between 40 cm and 70 cm.

In the light of the above description it will be clear to the person skilled in the art how the trolley 10 according to the invention is able to overcome the drawbacks mentioned above with reference to the trolleys of the prior art.

In particular, it will be clear to the person skilled in the art how the trolley 10 according to the invention is suitable, in the expanded configuration, for the transportation of a large quantity of goods.

Also, it will be clear to the person skilled in the art how the trolley 10 according to the invention is suitable, in the collapsed configuration, for the transportation of goods with a volume greater than that of the bag itself.

Moreover, it will be clear how the trolley 10 has notable stability properties also when subject to heavy loads.

Also, it will be clear to the person skilled in the art how the trolley 10, in the collapsed configuration, occupies a very small volume.

Finally, it will be clear to the person skilled in the art how the invention allows two or more trolleys 10 to be used at the same time and for them to be all moved using one hand only.

With regard to the embodiments of the trolley 10 described above, the person skilled in the art may, in order to satisfy specific requirements, make modifications to and/or replace elements described with equivalent elements, without thereby departing from the scope of the accompanying claims.

## Claims

1. Trolley (10) for moving goods (100), comprising:
- a rigid base (12) provided with a plurality of wheels (14);
- a soft bag (16) mounted on the rigid base (12); and
- a handle (18) suitable for moving the trolley (10) loaded with goods (100);
- wherein the bag (16) comprises an elastic structure (20) arranged so that the bag (16) may assume alternately a first expanded configuration, where it extends in a direction substantially perpendicular to the rigid base (12), and a second collapsed configuration, where it remains folded up on itself in the vicinity of the rigid base (12); and
- wherein the handle (18) is fixed to the trolley (10) by means of a flexible strap (22).

2. Trolley (10) according to Claim 1, wherein the handle (18) is fixed to the rigid base (12).

3. Trolley (10) according to Claim 1 or 2, wherein the handle (18) is fixed inside the bag (16) in the vicinity of the edge of the rigid base (12).

4. Trolley (10) according to any one of the preceding claims, wherein the elastic structure (20) comprises at least one helical shaped element able to act in the manner of a spring.

5. Trolley (10) according to any one of the preceding claims, wherein the top edge of the bag (16) comprises a rigid rim (24).

6. Trolley (10) according to any one of the preceding claims, wherein the elastic structure (20) is housed inside a proper sleeve formed on the wall of the bag (16).

7. Trolley (10) according to any one of the preceding claims, also comprising means (26) suitable for opposing the action of the elastic structure (20) so as to be able to keep the bag (16) in the collapsed configuration.

8. Trolley (10) according to the preceding claim, wherein said means comprise two ties (26) which are fixed to the top edge of the bag (16) and wherein said ties (26) may be passed around the rigid base (12) and joined together on the bottom side of the rigid base (12).

9. Trolley (10) according to the preceding claim, wherein said ties (26) comprise a first tie (26') and a second tie (26"), the first tie (26') comprising a link (28) provided with a closure (30) of the hook-and-loop type and designed to join the first tie (26') to the second tie (26").

10. Trolley (10) according to the preceding claim, wherein said link (28) is movable.

11. Trolley (10) according to any one of the preceding claims, also comprising an auxiliary grip (32) fixed to the rigid base (12) and designed to allow easy transportation of the trolley (10) when it is in the collapsed configuration.

12. Trolley (10) according to any one of the preceding claims, also comprising two auxiliary grips (32) which are fixed to the rigid base in positions diametrically opposite to each other.

13. Trolley (10) according to Claim 11 or 12, wherein an auxiliary grip (32) comprises a link (38) provided with a hook-and-loop type closure.

14. Trolley (10) according to any one of the preceding claims, also comprising a hood (36) comprising a lace (40) which allows closing thereof, the hood (36) being designed to protect the inside of the bag (16) from external agents or, alternatively, to protect the user from contact with the wheels (14).

15. Trolley (10) according to the preceding claim, wherein the hood (36) comprises an opening (42) suitable for allowing the handle (18) and/or the auxiliary grip (32) to pass through the hood (36) itself.
